# EUROPEAN PATENT APPLICATION

(11) **EP 1 693 101 A1**
(43) Date of publication of application: **23.08.2006**
(21) Application number: 05002875.2
(22) Date of filing: 11.02.2005
(51) Int. Cl.: B01D 67/00, H01M 4/94

(54) **A method for preparing a radiation grafted fuel cell membrane with enhanced chemical stability and a membrane electrode assembly**

(71) Applicant: PAUL SCHERRER INSTITUT, 5232 Villigen PSI (CH)
(72) Inventor: Scherer, Günther G., Dr., 5607 Hägglingen (CH); Gubler, Lorenz, Dr., 8006 Zürich (CH); Slaski, Michal, 4051 Basel (CH)
(74) Representative: Fischer, Michael

(57) **Abstract**

It is the aim of the present invention to provide a method for preparing a membrane to be assembled in a membrane electrode assembly and a membrane electrode assembly which both have significant mechanical stability and appropriate fuel cell characteristics.

These objectives are achieved according to the present invention by a method for preparing a membrane to be assembled in a membrane electrode assembly, such as a polymer electrolyte fuel cell, comprising the steps of:
a) irradiating the base polymer film with electromagnetic and/or particle radiation in order to form reactive centers, i.e. radicals, within the said polymer film;
b) exposing the irradiated film to a mixture of monomers amenable to radical polymerization comprising α-methylstyrene and methacrylonitrile in order to achieve the formation of a graft copolymer in said irradiated film.
c) Sulfonating the grafted film to introduce sulfonic acid sites providing ionic conductivity of the material.

## Description

The present invention relates to a method for preparing a membrane to be assembled in a membrane electrode assembly. Further, the present invention relates to a membrane electrode assembly.

Solid polymer electrolytes are used in electrochemical cells to exchange ions between anode and cathode and as separator for electrons and reactants between anode and cathode. The use of an ion exchange membrane as electrolyte was first described around 40 years ago by Grubb (General Electric, USA), i.e. in the US patent 2,913,511. Solid polymer electrolytes find widespread application in a range of electrochemical devices, such as electrolyzers, supercapacitors, ozone generators, fuel cells, etc.

The use of an ion exchange membrane is particularly interesting in a fuel cell, because it leads to simplification of the cell construction and system design, since the use of corrosive liquid electrolytes can be avoided. Proton exchange membranes (PEMs) find application in polymer electrolyte fuel cell (PEFC) stacks. These materials contain acid groups that are attached to the macromolecules of the polymer. The dissociation of the acid leads to the formation of mobile protons and fixed anions.

Predominantly, perfluorinated membrane materials, such as Nafion® (DuPont, USA), Flemion® (Asahi Glass, Japan), Aciplex® (Asahi Kasei, Japan), are used in PEFCs. The elaborate fabrication process, however, renders these membranes expensive components. Alternative, cost-effective membranes and processes have therefore a considerable relevance to enable the development and fabrication of cost-competitive materials for fuel cells. One such attractive method is the pre-irradiation induced graft copolymerization, whereby a preformed commodity polymer film is modified to introduce desirable functionality, such as proton conductivity. The method has been employed by a range of companies and groups from academia for fuel cell application. The process consists of the irradiation of the base polymer film to generate radicals, followed by a grafting step, whereby the activated film is brought into contact with a solution containing monomers, which results in a radical polymerization reaction and hence the growth of polymer side chains attached to the polymer chains of the base film. Subsequent reaction steps may follow to introduce proton conductivity. A popular monomer for radiation grafting is styrene, because it shows fast radical polymerization and, hence, practical degrees of grafting are obtained within a suitably short time of a few hours. The grafted polystyrene is subsequently sulfonated to introduce sulfonic acid sites to the styrene rings.

Sulfonated polystyrene has been used as proton exchange membrane material in fuel cells. It has been recognized early, however, that the aggressive conditions within the fuel cell, i.e. the reductive as well as oxidative conditions, and peroxide intermediates, impose considerable chemical stress onto the membrane material. Polystyrene is particularly prone to chemical attack in an environment of peroxide and radical intermediates due to the susceptibility of the α-hydrogen position towards oxidative attack. Therefore, the use alternative styrene derived monomers with protected α-position, such as α,β,γ-trifluorostyrene (TFS) or α-methylstyrene (AMS), has been suggested in the prior art. Being a fluorinated compound, TFS has the drawback of being significantly more expensive than styrene or AMS. In addition, grafting kinetics are poor, sulfonation is difficult, and the resulting mechanical properties of the membranes mediocre. The drawback of AMS, on the other hand, is the low ceiling temperature of 61 °C, the tendency for adverse chain transfer reactions to occur, and the concomitant poor grafting yield, which has been confirmed in our own experiments. It has been shown, however, that AMS grafted films can be obtained if acrylonitrile (AN) is used as co-monomer, because it stabilizes the terminal radical on the propagating graft polymer chain. It was shown that the graft copolymerization of AMS:AN mixtures, followed by sulfonation, yields proton exchange membranes of higher chemical stability compared to pure styrene grafted or styrene-AN grafted membranes, using FEP and ETFE as base polymer. Fuel cell experiments, however, have not been reported and the electrochemical characteristics of these membranes in a realistic environment remain to be established.

It is therefore the aim of the present invention to provide a method for preparing a membrane to be assembled in a membrane electrode assembly and a membrane electrode assembly which both have significant mechanical stability and appropriate fuel cell characteristics.

These objectives are achieved according to the present invention by a method for preparing a membrane to be assembled in a membrane electrode assembly, such as a polymer electrolyte membrane fuel cell, comprising the steps of:
a) irradiating the base polymer film with electromagnetic and/or particle radiation in order to form reactive centers, i.e. radicals, within the said polymer film;
b) exposing the irradiated film to a mixture of monomers amenable to radical polymerization comprising α-methylstyrene and methacrylonitrile in order to achieve the formation of a graft copolymer in said irradiated film; and
c) sulfonating the grafted film to introduce sulfonic acid sites providing ionic conductivity of the material.

With respect to the membrane electrode assembly these objects are achieved according to the present invention by a membrane electrode assembly, comprising a polymer electrolyte layer which is sandwiched between a cathode layer and an anode layer, whereby said polymer electrolyte layer is a graft copolymer membrane which comprise α-methylstyrene and methacrylonitrile as co-monomer. Other possible monomer combinations may be derivatives of α-methylstyrene, such as sodium α-methylstyrene sulfonate, methyl-α-methylstyrene, methoxy-α-methylstyrene, and co-monomers of the vinyl or acrylic type, such as acrylonitrile, maleic anhydride, acrylic acid, methacrylic acid, vinyl sulfonic acid, acrylamide, divinylbenzene, triallylcyanurate, N-vinylpyrrolidone, vinyl ethers (such as: ethylvinyl ether), fluorinated vinyl ethers, acrylates and methacrylates (such as: methyl methacrylate), vinyl pyridine and vinyl acetate.

In a preferred embodiment of the present invention the molar ratio of α-methylstyrene / methacrylonitrile may be in the range of 50/50 to 90/10, preferably in the range of 60/40 to 80/20. The monomer mixture may comprise additional monomers to obtain specific added membrane functionality, e.g. crosslinking. The neat monomer mixture may be used for the grafting reaction, or a solvent or solvent mixture, such as isopropanol and water, may be added to the monomer mixture.

In summarizing the invention it was found that for the radiation induced graft polymerization of AMS onto base films such as FEP and ETFE, methacrylonitrile (MAN) offers distinct advantages over acrylonitrile (AN) as co-monomer. Following experimental observations were made:
- The ratio of AMS to total graft component incorporated into the base film was higher when MAN is used as comonomer instead of AN
- The grafted films comprising base film and grafted AMS / MAN were sulfonated to yield ion exchange capacities of the order of 1 mmol/g.
- The nitrile groups of MAN do not hydrolyze in the graft copolymer in the presence of AMS during the sulfonation procedure used.
- The membranes showed higher degrees of sulfonation of the AMS units compared to the styrene units in standard styrene / divinylbenzene grafted membranes. Therefore, relatively high ion exchange capacities and proton conductivities were measured at low degree of grafting of AMS.
- AMS / MAN grafted and sulfonated membranes on the basis of FEP-25 were successfully tested in sub-scale fuel cells. Electrochemical characteristics similar to standard styrene / divinylbenzene grafted membranes and commercial membranes such as Nafion 112 were measured.
- The AMS / MAN based membranes showed superior temperature stability and durability in the fuel cell compared to uncrosslinked styrene based membranes.

These observation show a number of significant advantages over the teachings derived from the prior art:
- Radiation grafted membranes using AMS as monomer offers the prospect of a fuel cell membrane with inherently superior durability over styrene based membranes.
- Using MAN as co-monomer in the grafting of AMS, practical graft levels can be obtained using reasonable grafting conditions. By using a comonomer, the problem of prohibitively low ceiling temperature of AMS (61 °C) can be overcome.
- The MAN units in the AMS / MAN membranes do not adversely affect subsequent process steps (e.g. sulfonation) or the mechanical properties of the membrane.
- The MAN units do not interfere adversely with the proton conductivity provided by the sulfonated AMS units.
- Higher degree of sulfonation of AMS compared to styrene and the polar MAN units may have a positive effect on the water management properties of the membrane.
- There is indication that MAN is less harmful to health than AN.

The following figures and tables are used to introduce preferred embodiments of the present invention. Table 1 shows the properties of radiation grafted and sulfonated membranes based on FEP-25.

**Table 1: Properties of radiation grafted and sulfonated membranes based on FEP-25**

| **No.** | **Membrane** | **Graft Level** | **AMS Graft Level** | **Ion Exchange Capacity** | **Conductivity** |
|---|---|---|---|---|---|
| | | [mass-%] | [mass-%] | [mmol/g] | [mS/cm] |
| 1 | FEP-*g*-(PS-*co*- DVB) | 18.2 | n/a | 1.36 | 41 |
| 2 | FEP-g-PS | 18.9 | n/a | 1.21 | 104 |
| 3 | FEP-*g*-(AMS-*co*-MAN) | 20.8 | 3.0 | 1.08 | 40 |
| 4 | FEP-*g*-(AMS-*co*-MAN) | 34.5 | 9.1 | 1.38 | 98 |

Membrane 1 is a standard styrene grafted and divinylbenzene (DVB) crosslinked membrane which is used in H₂ / air fuel cells. Membrane 2 is a comparison example without DVB crosslinker. This type of membrane is very unstable in the fuel cell and leads to rapid failure of the membrane electrode assembly (cf. Table 2). Membranes 3 and 4 are of the inventive type, using AMS and MAN as co-monomers, with different graft level. It is shown that ion exchange capacity and conductivity similar to the styrene grafted membranes are obtained.

Table 2 shows the life time of radiation grafted and sulfonated membranes based on FEP-25 in the single cell.

**Table 2: Life time of radiation grafted and sulfonated membranes based on FEP-25 in the single cell.**

| **Experiment** | **system** | **Life Time** | **Maximum Temperature** |
|---|---|---|---|
| | | [h] | [°C] |
| 1 | FEP-*g*-PS | 49 | 80 |
| 2 | FEP-*g*-PS | 169 | 60 |
| 3 | FEP-*g*-(AMS-*co*-MAN) | 533 | 80 |
| 4 | FEP-*g*-(AMS-*co*-MAN) | 524 | 80 |

Pure styrene grafted membranes show inferior temperature stability and life time in the single cell compared to membranes of the inventive type.

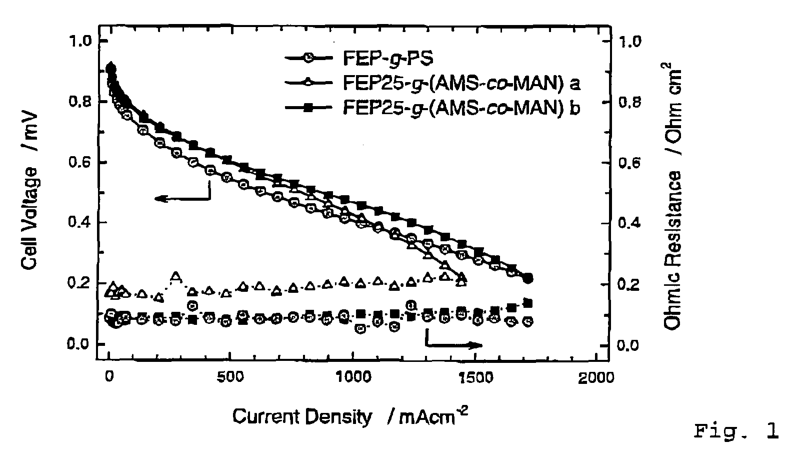

Figure 1 illustrates single cell polarization curves using styrene grafted membranes and membranes of the inventive type with two different graft levels (sample a = 3, b = 4 in **Table 1).** Cell temperature 60 °C; fuel: H₂, oxidant: O₂, both gases humidified at 60 °C, pressure 1 barₐ.

The single cell polarization curve **(Figure 1)** shows that both AMS/MAN grafted membranes have superior performance at low current density compared to the styrene grafted membrane. The AMS/MAN membrane with higher graft level yields a lower ohmic cell resistance and higher performance at medium and high current densities. Compared to the styrene grafted membrane, membrane b shows similar ohmic resistance but higher performance over the entire current density range.

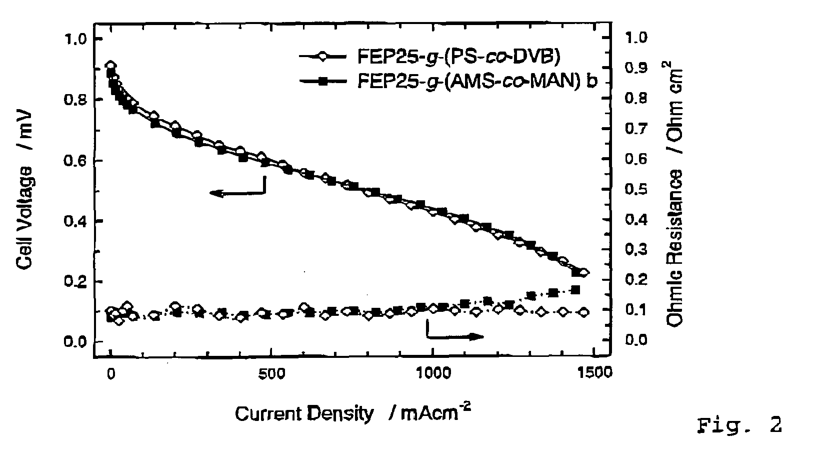

Figure 2 illustrates single cell polarization curves using a standard DVB crosslinked membrane and a membrane of the inventive type. Cell temperature 80 °C; fuel: H₂, oxidant: O₂, both gases humidified at 80 °C, pressure 1 barₐ.

Compared to the styrene grafted and DVB crosslinked membrane, the AMS/MAN grafted membrane shows similar single cell performance **(Figure 2)** as compared to the curves in Figure 1.

The following section explains one embodiment of the method to generate a radiation grafted fuel cell membrane with the afore-mentioned enhanced properties. Thereby, the synthesis of AMS/MAN membranes for PEFC contains the two known steps of grafting and sulfonation.

### Synthesis of FEP-g-(AMS-co-MAN)

An FEP film of 25 µm thickness was irradiated with an electron beam in air atmosphere with dose of 25 kGy. Piece of 1g of preirradiated FEP film was placed in a trap-type reaction tube, equipped with two stopcocks. The tube was filled with a 60 ml of reaction mixture prepared by mixing: 12.7 cm³ of AMS, 5.3 cm³ of MAN, 12 cm³ of water and 30 cm³ of isopropanol. The tube was closed. Nitrogen was passed through at a flow rate 12 Nl/h, by the valve connected with the bottom tube. After one hour of purging the tube was sealed and transferred to a water bath. The temperature of the water bath was maintained at 60 ºC. After 22 hrs of reaction, the solution was removed from the tube, and the tube with the product was washed three times with acetone (60 ml each washing). The product was removed from the tube and left for drying in a vacuum oven at 50ºC for 3 hrs.

### Sulfonation

650 cm³ of dry methylene chloride and 30 cm³ of chlorosulfonic acid were placed in a beaker shaped glass vessel, equipped with magnetic stirrer, gas vent and cap. 5g (about five sheets) of FEP-g-(AMS-co-MAN) film were placed in the reaction vessel. The mixture was stirred for 6 hrs. After 6 hrs product was transferred to a beaker filled with water. After 12 hrs the product was placed in a beaker with 500 cm³ of aqueous solution of sodium hydroxide (4g/dm³) and stirred for 6 hrs. Subsequently, the product was washed with water and treated with 500 cm³ of 2M H₂SO₄ for 6 hrs. To remove sulfuric acid, the product was treated in water at 80ºC for 6 hrs. The water was changed until pH was neutral.

### Units and Abbreviation:

MAN - methacrylonitrile
AMS - alpha methylstyrene
FEP - poly(tetrafluoroethylene -co-hexafluoropropylene)
Nl/h - normal liter per hour
FEP-g-(AMS-co-MAN) - FEP grafted with AMS and MAN
kGy - kilo Grey

### Materials:

Monomers were used as received (MAN Aldrich 19541-3, AMS Aldrich M8, 090-3). water was demineralized using a Serapur Pro 90CN system (conductivity < 0.5 µS/cm). Chlorosulfonic acid was pure grade, purchased from Fluka (26388). Sodium hydroxide, sulfuric acid and isopropanol were analytical grade. FEP film was purchased from DuPont, and was stored between irradiation and grafting at -80ºC for ca. 2 months.

## Claims

1. A method for preparing a membrane to be assembled in a membrane electrode assembly, such as a polymer electrolyte membrane fuel cell, comprising the steps of:
a) irradiating the base polymer film with electromagnetic and/or particle radiation in order to form reactive centers, i.e. radicals, within the said polymer film;
b) exposing the irradiated film to a mixture of monomers amenable to radical polymerization comprising α-methylstyrene and methacrylonitrile in order to achieve the formation of a graft copolymer in said irradiated film.
c) sulfonating the grafted film to introduce sulfonic acid sites providing ionic conductivity of the material.

2. The method according to claim 1, wherein
the ratio of α-methylstyrene / methacrylonitrile is in the range of 50/50 to 90/10, preferably in the range of 80/20.

3. The method according to claim 1 or 2, wherein
the mixture comprises 10 to 40 vol% α-methylstyrene and 2 to 20 vol% methacrylonitrile.

4. The method according to claim 3, wherein
the mixture contains further monomers, such as a crosslinker, or a solvent or solvent mixture, such as isopropanol and water.

5. A membrane electrode assembly, comprising a polymer electrolyte layer which is sandwiched between a cathode layer and an anode layer, **characterized in that** said polymer electrolyte layer is a graft copolymer membrane which comprises α-methylstyrene and methacrylonitrile.
